# EUROPEAN PATENT APPLICATION

(11) **EP 4 815 187 A1**
(43) Date of publication of application: **30.09.2026**
(21) Application number: 25905652.1
(22) Date of filing: 29.08.2025
(51) Int. Cl.: H01M 50/60, H01M 50/59, H01M 50/289, H01M 10/625, H01M 50/249, H01B 3/42

(54) **BATTERY CELL ARRAY, BATTERY PACK INCLUDING SAME BATTERY CELL ARRAY, AND VEHICLE INCLUDING SAME BATTERY PACK**

(30) Priority: 19.12.2024 KR 20240191517
(71) Applicant: LG Energy Solution, Ltd., Seoul 07335 (KR)
(72) Inventor: PARK, So-Jeong, Daejeon 34122 (KR); MOON, Dong-Jae, Daejeon 34122 (KR); YOO, In-Seok, Daejeon 34122 (KR)
(74) Representative: Goddar, Heinz J.
(86) International application number: PCT/KR2025/013302
(87) International publication number: WO 2026/134533

(57) **Abstract**

Disclosed is a battery cell array, which includes a plurality of battery cells; a side frame configured to support the plurality of battery cells and form an edge of the battery cell array; at least one cooling unit disposed between the plurality of battery cells and assembled with the side frame to be at least partially protruding out of the side frame; a filling member filled between the plurality of battery cells; and a leak prevention unit configured to seal a gap space created when the side frame and the at least one cooling unit are assembled to prevent leakage of the filling member while the filling member is filled.

## Description

### TECHNICAL FIELD

The present disclosure relates to a battery cell array, a battery pack including the battery cell array, and a vehicle including the battery pack, and relates to a battery cell array having improved sealing performance, a battery pack including the battery cell array, and a vehicle including the battery pack.

This application is based on and claims priority from Korean Patent Application No. 10-2024-0191517, filed on December 19, 2024, with the Korean Intellectual Property Office, the disclosure of which is incorporated herein in its entirety by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at the preset include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a battery cell array may be configured by connecting a plurality of battery cells in parallel, and a battery pack may be configured using at least one battery cell array. Thus, the number of battery cells included in the battery pack may be variously set according to the required output voltage or the demanded charge/discharge capacity.

Recently, in the case of battery cell arrays, in more cases, a potting resin is applied as a filling member in the empty space between components for the purpose of preventing heat diffusion while securing structural rigidity. However, if a potting resin is used as a filling member, the viscosity is low before curing, so leakage may occur through the bottom surface or the gap space due to assembly tolerance between components. In other words, when filling the filling member, the filling member may leak out of the battery cell array through the bottom surface of the battery cell array or the gap space due to assembly tolerance between components.

Therefore, there is a need to find a way to provide a battery cell array that may prevent leakage of the filling member when filling the filling member, a battery pack including the battery cell array, and a vehicle including the battery pack.

### DISCLOSURE

### Technical Problem

Accordingly, the present disclosure is directed to providing a battery cell array capable of preventing leakage of a filling member, a battery pack including the battery cell array, and a vehicle including the battery pack.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery cell array comprising: a plurality of battery cells; a side frame configured to support the plurality of battery cells and form an edge of the battery cell array; at least one cooling unit disposed between the plurality of battery cells and assembled with the side frame to be at least partially protruding out of the side frame; a filling member filled between the plurality of battery cells; and a leak prevention unit configured to seal a gap space created when the side frame and the at least one cooling unit are assembled to prevent leakage of the filling member while the filling member is filled.

Also, preferably, the battery cell array may further comprise a sheet member provided to a bottom of the plurality of battery cells and the side frame.

Also, preferably, the leak prevention unit may fill the gap space.

Also, preferably, the leak prevention unit may include a foam member.

Also, preferably, the side frame may include a cooling unit passing portion configured to protrude a part of the at least one cooling unit to an outside of the side frame so that the gap space is formed therein during the assembling, and the leak prevention unit may seal the cooling unit passing portion in which the gap space is formed.

Also, preferably, the cooling unit passing portion may include a step portion formed to be stepped at a predetermined depth from an outer surface of the side frame; and a passage groove provided in the step portion to allow a part of the cooling unit to pass therethrough, and the leak prevention unit may be filled in the step portion to seal a gap of the passage groove.

Also, preferably, the side frame may include a pair of side walls provided at both outermost sides of the plurality of battery cells; and a plurality of side structures provided between the pair of side walls, the cooling unit passing portion may be provided in plurality and provided to both the pair of side walls and the plurality of side structures, and the leak prevention unit may be provided in plurality to seal all gap spaces of the plurality of cooling unit passing portions.

Also, preferably, the sheet member may contain insulating material.

Also, preferably, the sheet member may be provided as a polycarbonate sheet.

Also, preferably, the battery cell array may further comprise an adhesive member applied to an edge of the sheet member to fix the sheet member to the side frame.

Also, preferably, the filling member may contain a resin with adhesive properties.

Also, preferably, an edge of the sheet member may be sealed as being pressed by a weight of the side frame when the side frame is mounted.

In another aspect of the present disclosure, there is also provided a battery pack comprising at least one battery cell array according to the former embodiments.

In another aspect of the present disclosure, there is also provided a vehicle comprising at least one battery pack according to the former embodiments.

### Advantageous Effects

According to various embodiments as described above, it is possible to provide a battery cell array capable of preventing leakage of a filling member, a battery pack including the battery cell array, and a vehicle including the battery pack.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery cell array according to an embodiment of the present disclosure.
FIG. 2 is an exploded perspective view showing a battery cell array according to an embodiment of the present disclosure.
FIG. 3 is a drawing for illustrating a filling member leak prevention method using a leak prevention unit in the battery cell array according to an embodiment of the present disclosure.
FIG. 4 is a drawing showing a battery cell array according to an embodiment of the present disclosure without the leak prevention unit.
FIG. 5 is a bottom view showing a battery cell array according to an embodiment of the present disclosure.
FIG. 6 is a bottom view showing a battery cell array according to an embodiment of the present disclosure without a sheet member.
FIG. 7 is a drawing for illustrating the assembly of battery cells, a side frame, and a cooling unit of the battery cell array according to an embodiment of the present disclosure.
FIG. 8 is an enlarged view showing the main portion of FIG. 7.
FIG. 9 is a drawing for illustrating a leak prevention unit according to an embodiment of the present disclosure.
FIG. 10 is a drawing illustrating a leak prevention unit mounted to a side wall of a side frame of the battery cell array according to an embodiment of the present disclosure.
FIG. 11 is a drawing for illustrating a leak prevention unit mounted to a side structure of a side frame of the battery cell array according to an embodiment of the present disclosure.
FIGS. 12 and 13 are drawings for illustrating a sheet member mounting process in the battery cell array according to an embodiment of the present disclosure.
FIG. 14 is a drawing for illustrating a battery cell array according to another embodiment of the present disclosure.
FIG. 15 is a drawing for illustrating a battery pack according to an embodiment of the present disclosure.
FIG. 16 is a drawing for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

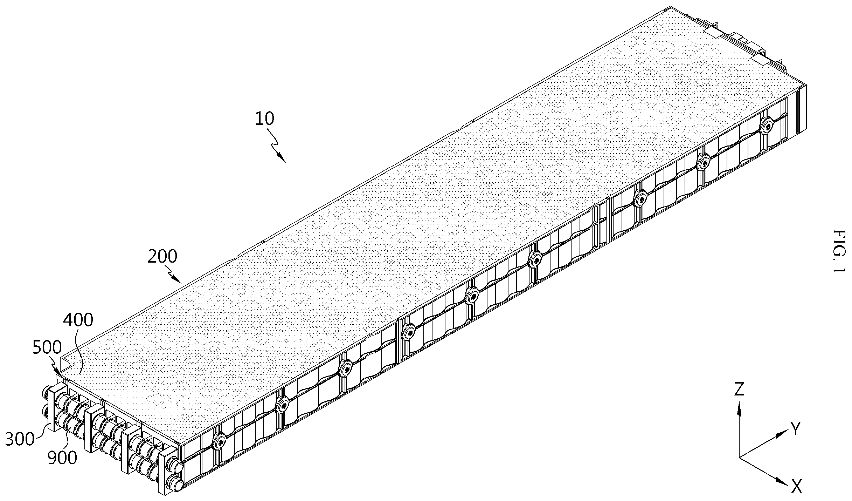

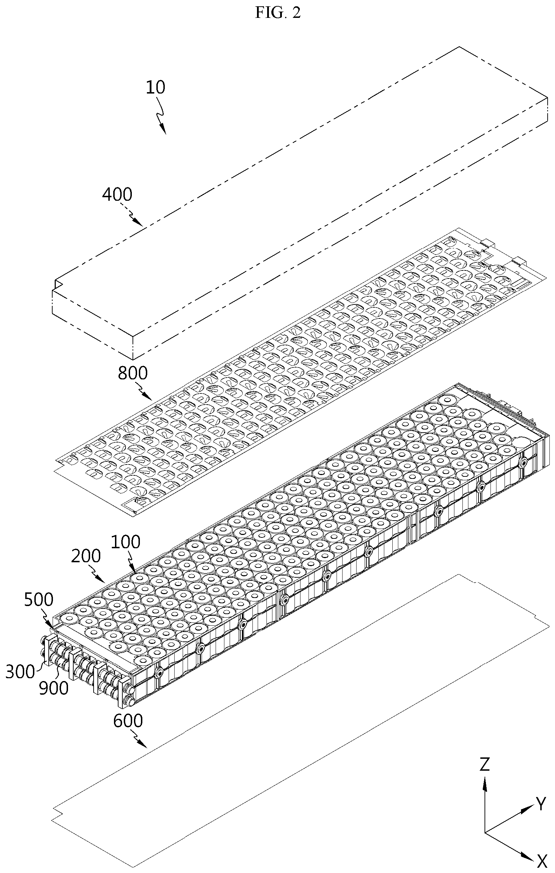

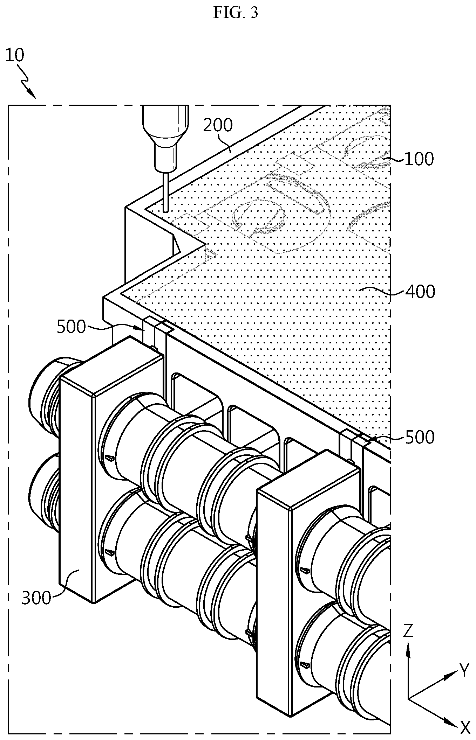

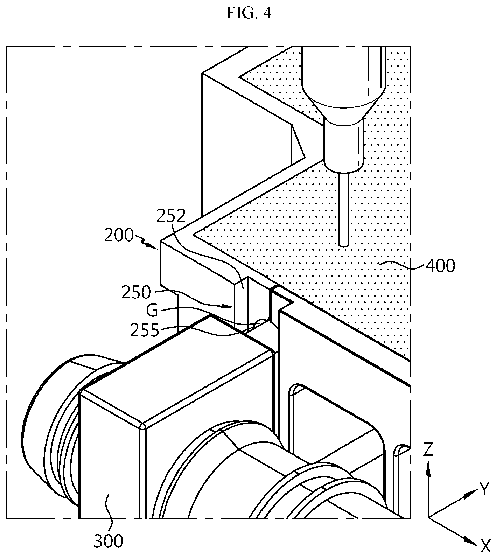

FIG. 1 is a diagram for illustrating a battery cell array according to an embodiment of the present disclosure, FIG. 2 is an exploded perspective view showing a battery cell array according to an embodiment of the present disclosure, FIG. 3 is a drawing for illustrating a filling member leak prevention method using a leak prevention unit in the battery cell array according to an embodiment of the present disclosure, and FIG. 4 is a drawing showing a battery cell array according to an embodiment of the present disclosure without the leak prevention unit.

Referring to FIGS. 1 to 4, the battery cell array 10 may include a plurality of battery cells 100, a side frame 200, a cooling unit 300, a filling member 400, and a leak prevention unit 500.

The plurality of battery cells 100 may be provided as a secondary battery, and may be a cylindrical secondary battery, a pouch-type secondary battery, or a rectangular secondary battery. Hereinafter, in this embodiment, the plurality of battery cells 100 will be described as being provided as a cylindrical secondary battery. The plurality of battery cells 100 may be arranged in plurality in both the longitudinal direction (Y-axis direction) and the width direction (X-axis direction) of the battery cell array 10 in order to realize a large capacity of the battery cell array 10.

The side frame 200 may support the plurality of battery cells 100. The side frame 200 may form an edge of the battery cell array 10.

The cooling unit 300 is for cooling the plurality of battery cells 100 and may be elongated to have a predetermined length along the longitudinal direction (Y-axis direction) of the battery cell array 10. The cooling unit 300 is arranged between the plurality of battery cells 100 and may be provided in at least one or more units. Hereinafter, this embodiment will be described as being limited to the case where the cooling unit 100 is provided in plurality.

The cooling unit 300 may be assembled with the side frame 200 so that at least a part of the cooling unit 300 protrudes to the outside of the side frame 200. This is to connect the cooling unit 300 to an external cooling device. Meanwhile, when assembling the cooling unit 300 with the side frame 200, a gap space G (see FIG. 4) may be formed between the cooling unit 300 and the side frame 200 due to the assembly tolerance.

The filling member 400 may be filled between the plurality of battery cells 100. The filling member 400 may be provided as a potting resin. The filling member 400 may reinforce the structural rigidity of the battery cell array 10. In addition, the filling member 400 may prevent heat diffusion between adjacent battery cells 100, thereby suppressing heat propagation that may occur between adjacent battery cells 100 during a thermal event.

The leak prevention unit 500 may seal the gap space G (see FIG. 4) that occurs when assembling the side frame 200 and the at least one cooling unit 300 to prevent leakage of the filling member 400 when the filling member 400 is filled. The filling member 400 made of a potting resin has low viscosity before curing when filled between the battery cells 100, and therefore may leak into the gap space G described above before curing.

According to an embodiment of the present disclosure, since the leak prevention unit 500 seals the gap space G, when the filling member 400 is filled, leakage of the thin filling member 400 through the gap space G before the filling member 400 is cured may be fundamentally prevented.

In this way, in the battery cell array 10 according to an embodiment of the present disclosure, the filling member 400 may be filled between the battery cells 100 without leakage or seepage of the filling member 400.

Therefore, according to an embodiment of the present disclosure, in the battery cell array 10 having a filling structure of the filling member 400, product reliability may also be significantly increased while ensuring high airtightness and watertightness performance.

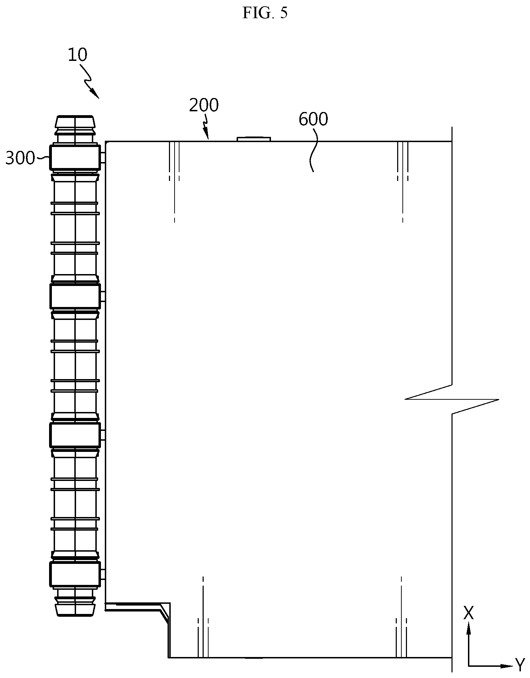

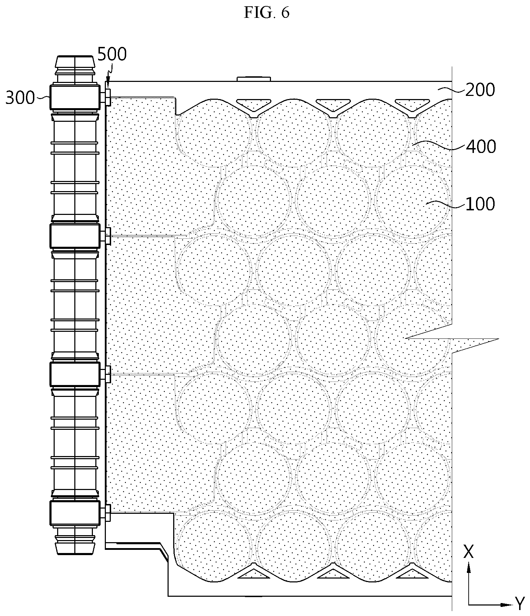

FIG. 5 is a bottom view showing a battery cell array according to an embodiment of the present disclosure, and FIG. 6 is a bottom view showing a battery cell array according to an embodiment of the present disclosure without a sheet member.

Referring to FIGS. 5 and 6 along with the preceding drawings, the battery cell array 10 may include a sheet member 600.

The sheet member 600 may be provided to the bottom of the plurality of battery cells 100 and the side frame 200. The sheet member 600 may be provided in a size that may cover the entire bottom region of the battery cell array 10 and may form the bottom region of the battery cell array 10.

According to an embodiment of the present disclosure, since the sheet member 600 is provided to the bottom of the plurality of battery cells 100 and the side frame 200 to cover the entire bottom region of the battery cell array 10, when the filling member 400 is filled, leakage of the runny filling member 400 to the bottom of the battery cell array 10 before being cured may be prevented.

In this way, in the battery cell array 10 according to an embodiment of the present disclosure, when the filling member 400 is injected for filling, leakage or seepage of the filling member 400 that may occur at the bottom side of the battery cell array 10 may be effectively prevented.

The sheet member 600 may contain an insulating material. The sheet member 600 may effectively prevent the risk of a short circuit of the battery cells 100 that may occur in the external environment of the battery cell array 10, particularly at the bottom side of the battery cell array 10.

The sheet member 600 may be provided as a polycarbonate sheet. That is, the sheet member 600 may be provided as a PC sheet.

In this embodiment, through the sheet member 600 as above, leakage of the filling member 400 at the bottom side of the battery cell array 10 may be prevented, and insulation performance may also be secured.

Hereinafter, the leak prevention unit 500 will be described in more detail.

The leak prevention unit 500 may fill the gap space G (see FIG. 4). Specifically, the leak prevention unit 500 may cover the gap space G to prevent leakage or seepage of the filling member 400 to the outside of the gap space G. In other words, the leak prevention unit 500 may fill the gap space G to seal the gap space G. Therefore, when the filling member 400 is injected, the runny filling member 400 cannot escape outside the gap space G, i.e., outside the battery cell array 10, due to the leak prevention unit 500.

The leak prevention unit 500 may include a foam member. In addition, the leak prevention unit 500 may also be provided as a foam tape. For example, the leak prevention unit 500 may be provided as CR sponge (Chloroprene Sponge). Therefore, in this embodiment, the sealing performance of the gap space G may be secured with a simpler structure without adding or modifying a separate complex structure.

The leak prevention unit 500 may contain an insulating material. The leak prevention unit 500 may also effectively prevent the risk of a short circuit of the battery cells 100 that may be caused by the external environment of the battery cell array 10.

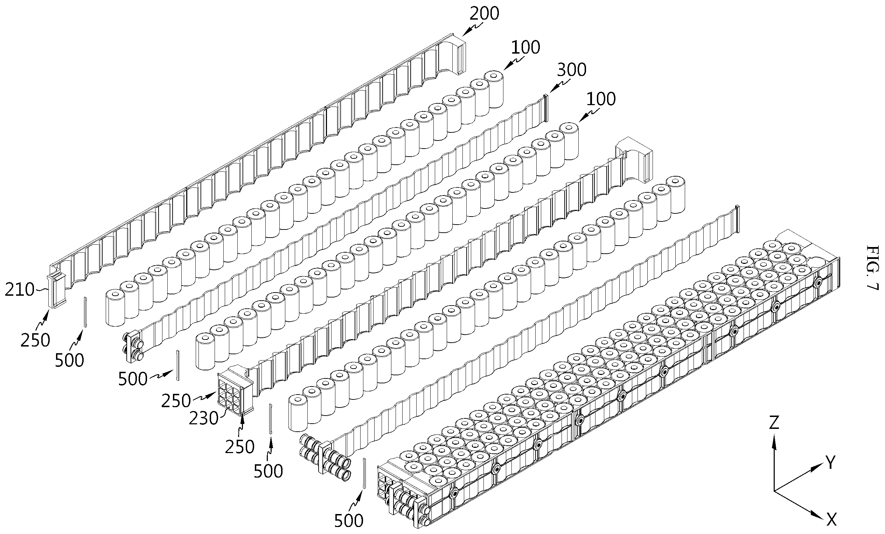

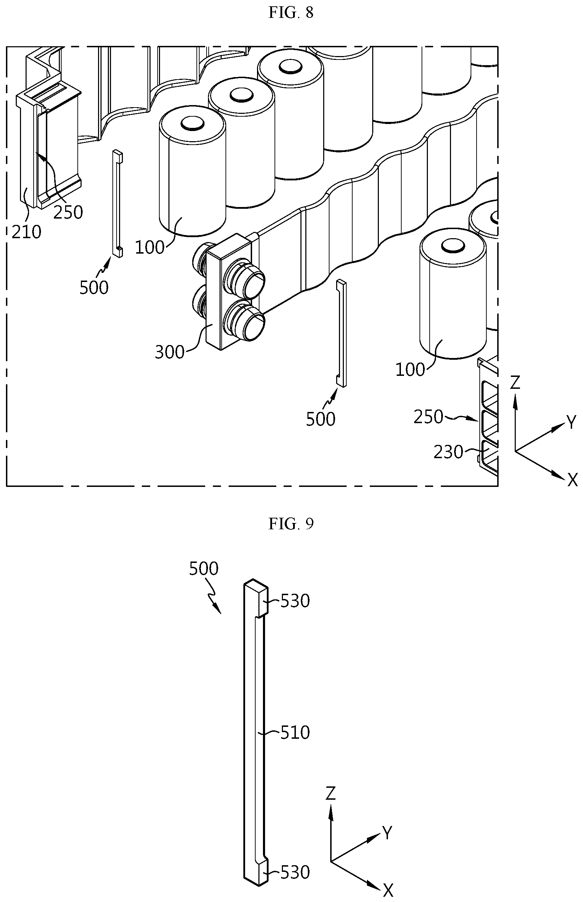

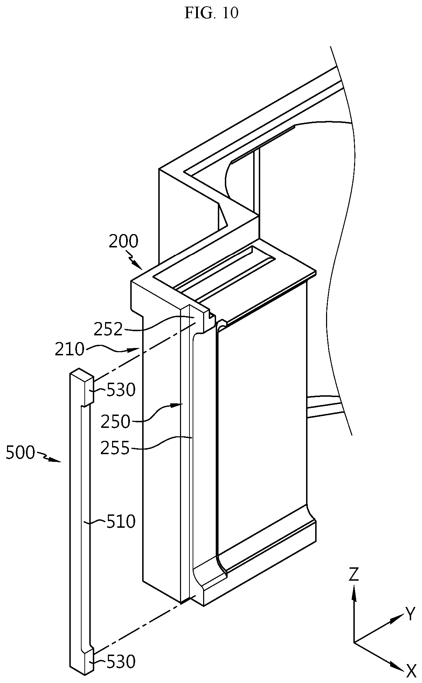

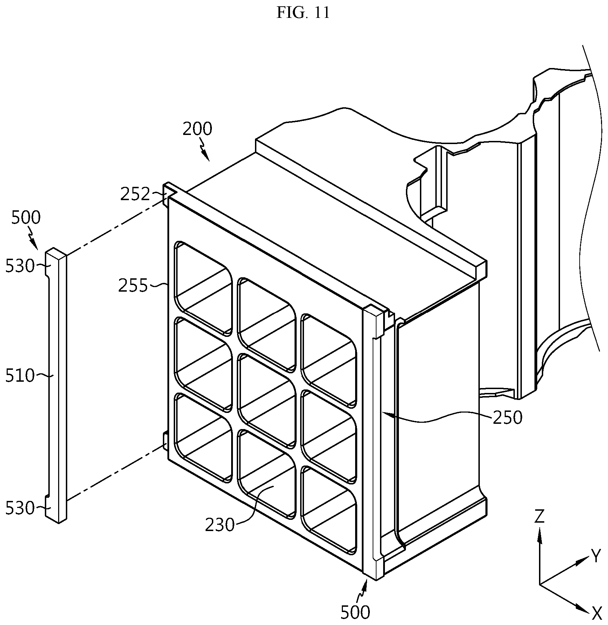

FIG. 7 is a drawing for illustrating the assembly of battery cells, a side frame, and a cooling unit of the battery cell array according to an embodiment of the present disclosure, FIG. 8 is an enlarged view showing the main portion of FIG. 7, FIG. 9 is a drawing for illustrating a leak prevention unit according to an embodiment of the present disclosure, FIG. 10 is a drawing illustrating a leak prevention unit mounted to a side wall of a side frame of the battery cell array according to an embodiment of the present disclosure, and FIG. 11 is a drawing for illustrating a leak prevention unit mounted to a side structure of a side frame of the battery cell array according to an embodiment of the present disclosure.

Referring to FIGS. 7 to 11 along with the preceding drawings, the side frame 200 may include a cooling unit passing portion 250 that protrudes a part of the at least one cooling unit 300 out of the side frame 200, so that the gap space G (see FIG. 4) is formed therein during assembling. In this embodiment, the leak prevention unit 500 may seal the cooling unit passing portion 250 in which the gap space G is formed.

The cooling unit passing portion 250 may include a step portion 252 and a passage groove 255.

The step portion 252 is provided at one end of the side frame 200 and may be formed to be stepped at a predetermined depth from the outer surface of the side frame 200. The step portion 252 may minimize interference, such as collisions, between the components when assembling the side frame 200 and the cooling unit 300.

The passage groove 255 is provided in the step portion 252 and may allow a part of the cooling unit 300 to pass therethrough. A part of the cooling unit 300 may protrude out of the side frame 200 and be disposed within the passage groove 255.

The leak prevention unit 500 may be filled in the step portion 252 so as to seal the gap of the passage groove 255. Specifically, the leak prevention unit 500 may be placed on the step portion 252 to fill the space formed by the step of the step portion 252 while covering the gap of the passage groove 255.

The side frame 200 may include a pair of side walls 210 and a plurality of side structures 230.

The pair of side walls 210 may be provided at both outermost sides of the plurality of battery cells 100. The pair of side walls 210 may be provided at both outermost sides in the width direction (X-axis direction) of the battery cell array 10 to form a side appearance of the battery cell array 10. Each of the pair of side walls 210 may accommodate one row of the battery cells 100 to support the same.

The plurality of side structures 230 may be provided between the pair of side walls 230. The plurality of side structures 230 may be arranged between the pair of side walls 230 in the width direction (X-axis direction) of the battery cell array 10. Each of the plurality of side structures 230 may accommodate two rows of battery cells 100 to support the same.

The cooling unit passing portion 250 may be provided in plurality and may be provided to both the pair of side walls 210 and the plurality of side structures 230. The plurality of cooling unit passing portions 250 may be arranged in pairs facing each other with the cooling unit 300 interposed therebetween. The passage grooves 255 of the pair of facing cooling unit passing portions 250 may form a groove structure through which a part of one cooling unit 300 may pass.

The leak prevention unit 500 may be provided in plurality to seal all gap spaces G of the plurality of cooling unit passing portions 250. Therefore, in this embodiment, sealing performance may be secured in all gap spaces G of the plurality of cooling unit passing portions 250 through the plurality of leak prevention units 500.

The plurality of leak prevention units 500 may be arranged to face each other with each cooling unit 300 interposed therebetween. The pair of leak prevention units 500 arranged to face each other with each cooling unit 300 interposed therebetween may be arranged on the pair of cooling unit passing portions 250 provided at both sides of the cooling unit 300. The pair of leak prevention units 500 arranged to face each other with each cooling unit 300 interposed therebetween may have a predetermined elasticity and may be formed to be slightly larger than the size of the pair of cooling unit passing portions 250 provided at both sides of the cooling unit 300. Accordingly, the pair of leak prevention units 500 arranged to face each other with each cooling unit 300 interposed therebetween may pressurize each other when arranged on the pair of cooling unit passing portions 250 provided at both sides of the cooling unit 300. According to this pressurization, the pair of cooling unit passing portions 250 provided at both sides of the cooling unit 300 may be further sealed.

In addition, in this embodiment, since the plurality of leak prevention units 500 have a predetermined elasticity, it is possible to effectively prevent damage to the side frame 200 and the cooling unit 300 by buffering collisions that may occur during assembly of the side frame 200 and the cooling unit 300.

The plurality of leak prevention units 500 may include a body 510 and a protrusion 530, respectively.

The body 510 has a predetermined elasticity and may be formed to have a predetermined length along the height direction (Z-axis direction) of the side frame 200. The body 510 may be at least partially placed on the step portion 252 along the longitudinal direction (Z-axis direction) of the passage groove 255 of the cooling unit passing portion 250.

The protrusion 530 may be provided as a pair. The pair of protrusions 530 may have a predetermined elasticity and may be formed to protrude from both ends (Z-axis direction) of the body 510 by a predetermined length along the width direction (X-axis direction) of the side frame 200. The pair of protrusions 530 may be mounted on the step portion 252 of the cooling unit passing portion 250 so as to be arranged at the upper and lower sides (+Z-axis direction and -Z-axis direction) of the passage groove 255.

The plurality of leak prevention units 500, which include the body 510 and the pair of protrusions 530, may be fixedly mounted to the pair of side walls 210 of the side frame 200 and the cooling unit passing portion 250 of the plurality of side structures 230. Here, since the pair of side walls 210 has one cooling unit passing portion 250 as shown in FIG. 10, one leak prevention unit 500 is fixedly mounted thereto. Also, since the plurality of side structures 230 have two cooling unit passing portions 250 as shown in FIG. 11, two leak prevention units 500 may be fixedly mounted thereto.

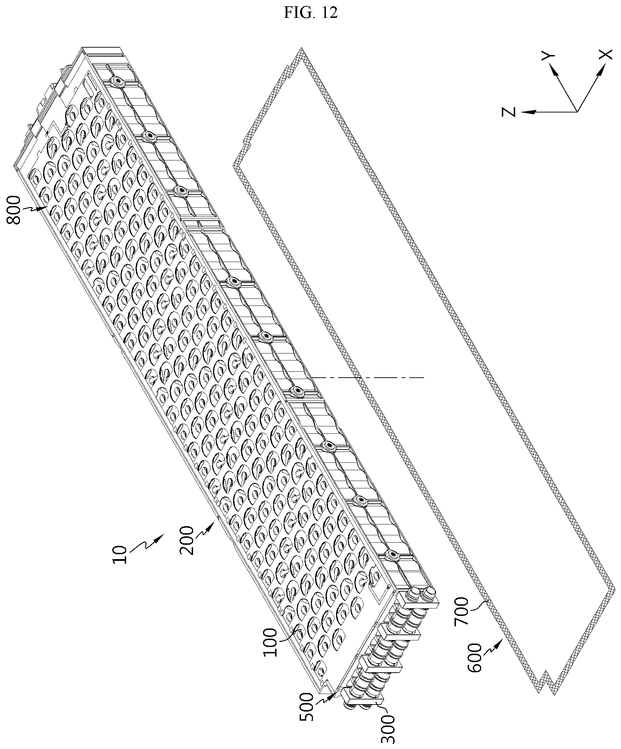

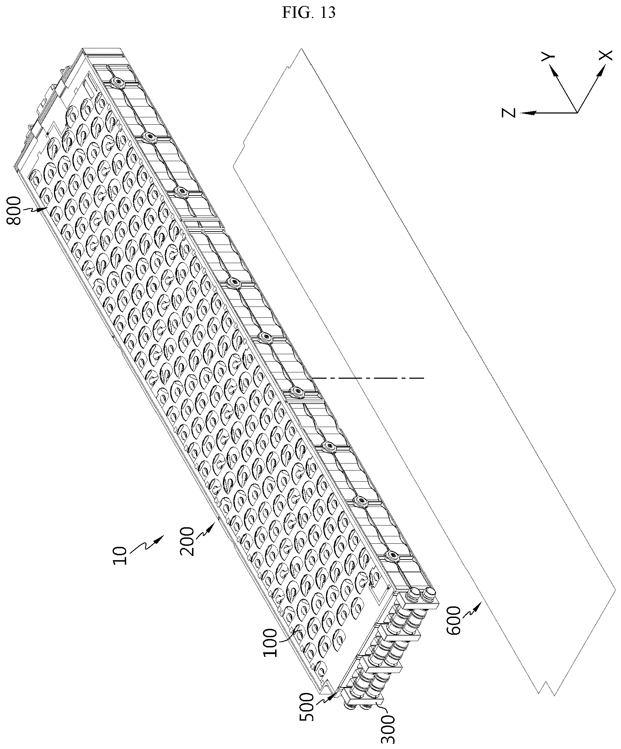

FIGS. 12 and 13 are drawings for illustrating a sheet member mounting process in the battery cell array according to an embodiment of the present disclosure.

Referring to FIG. 12, if the side frame 200 supporting the plurality of battery cells 100 is completely assembled with the cooling unit 300, the sheet member 600 may be mounted to the bottom of the battery cell array 10. As described above, when assembling the side frame 200 and the cooling unit 300, the plurality of leak prevention units 500 may also be fixedly mounted to the side frame 200 so as to seal the gap space G (see FIG. 4).

The battery cell array 10 may include an adhesive member 700 applied to an edge of the sheet member 600 to more stably fix the sheet member 600 to the side frame 200. If the fixation of the sheet member 600 to the bottom side of the battery cell array 10 is completed, the filling member 400 may be injected from the upper side (+Z-axis direction) of the battery cell array 10 to fill the filling member 400 between the battery cells 100. In this embodiment, the leak prevention unit 500 and the sheet member 600 may effectively prevent leakage or seepage of the runny filling member 400 before being cured when the filling member 400 is filled.

Referring to FIG. 13, the battery cell array 10 may also fix the sheet member 600 to the side frame 200 and the bottom of the battery cells 100 through an adhesive resin. To this end, the filling member 400 may contain an adhesive resin. Accordingly, the sheet member 600 may be fixed to at least one of the bottom of the battery cells 100 and the side frame 200 as the filling member 400 is cured without a separate adhesive member 700.

In addition, the edge of the sheet member 600 may be sealed by being pressed by the weight of the side frame 200 when the side frame 200 is mounted. In this way, it is also possible to seal the edge of the sheet member 600 only by the weight of the side frame 200 without a separate adhesive member 700 or a resin having adhesive properties.

Referring to FIGS. 1 and 2 again, the filling member 400 may contain a silicone resin. However, the present disclosure is not limited thereto, and the filling member 400 may also include resin materials capable of improving the fixing and heat dissipation efficiency of the battery cells 100 other than the silicone resin.

The battery cell array 10 may include a bus bar assembly 800.

The bus bar assembly 800 is provided at the upper side of the plurality of battery cells 100 and may be electrically connected to the plurality of battery cells 100. In this embodiment, both the positive and negative electrodes of the battery cells 100 may be provided at the upper side of the battery cell array 10. Accordingly, the electrical connection between the bus bar assembly 800 and the battery cells 100 may be entirely implemented at the upper side of the battery cell array 10. Meanwhile, the filling member 400 may also be filled to cover the bus bar assembly 800.

The battery cell array 10 may include a connection pipe 900.

The connection pipe 900 may connect the plurality of cooling units 300. The connection pipe 900 may be provided in plurality. In addition, the connection pipe 900 may be connected to the external cooling device and guide the connection between the cooling unit 300 and the external cooling device.

The connection pipe 900 may guide the cooling medium supplied from the external cooling device to be supplied to the cooling units 300 and the cooling medium circulated through the cooling units 300 to be discharged to the external cooling device. To this end, a cooling path for the circulation of the cooling medium may be provided inside the cooling units 300.

The cooling medium may be provided as a cooling fluid capable of circulating through the cooling units 300 while cooling the battery cells 100. For example, the cooling medium may be provided as a cooling water. However, the present disclosure is not limited thereto, and the cooling medium may also be provided as any other cooling fluid capable of circulating through the cooling units 300 while cooling the battery cells 100.

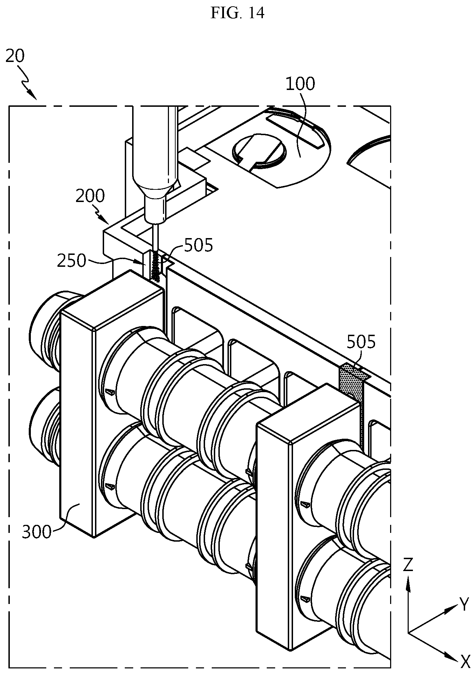

FIG. 14 is a drawing for illustrating a battery cell array according to another embodiment of the present disclosure.

The battery cell array 20 according to this embodiment is similar to the battery cell array 10 of the former embodiment, and thus features substantially identical or similar to those of the former embodiment will not be described again, and features different from the former embodiment will be described in detail.

Referring to FIG. 14, the battery cell array 20 may include the plurality of battery cells 100, the side frame 200, the cooling unit 300, and a leak prevention unit 505.

The plurality of battery cells 100, the side frame 200, and the cooling unit 300 are substantially identical or similar to those of the former embodiment, and thus will not be described again. In addition, although not illustrated, the battery cell array 20 may further include the filling member 400 (see FIGS. 1 and 2) and the sheet member 600 (see FIGS. 1 and 2). In addition, the battery cell array 20 may include the bus bar assembly 800 (see FIGS. 1 and 2) and the connection pipe 900 (see FIGS. 1 and 2).

The leak prevention unit 505 may be provided as a foam material that is injected by spraying or the like and then hardened. For example, the leak prevention unit 505 may be provided as a urethane foam. The leak prevention unit 505 may be injected into the cooling unit passing portion 250 and then cured. If the injection and hardening of the leak prevention unit 505 are completed, the filling member 400 (see FIGS. 1 and 2) may be filled. In this way, the leak prevention unit 505 may also be provided as a foam material that is injected by spraying or the like and then cured.

Therefore, in this embodiment, since the space of the cooling unit passing portion 250 may be filled by injecting the leak prevention unit 505, the gap space of the cooling unit passing portion 250 may be sealed with a simpler process.

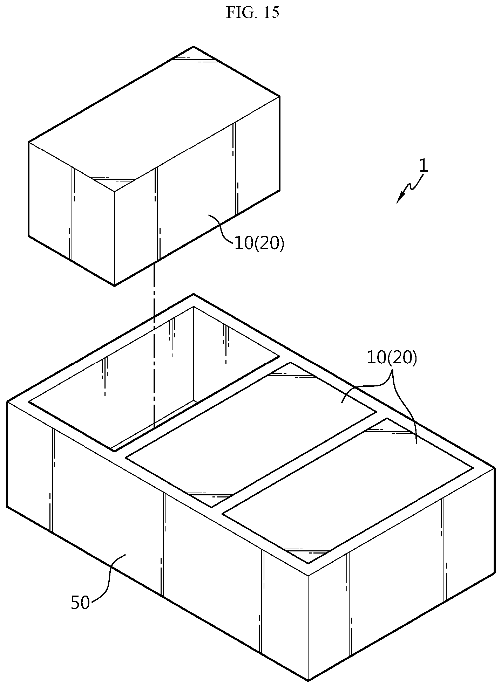

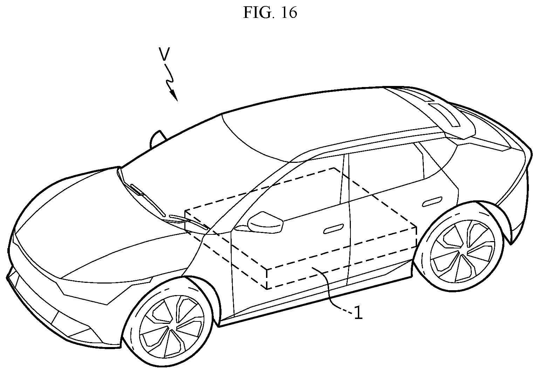

FIG. 15 is a drawing for illustrating a battery pack according to an embodiment of the present disclosure, and FIG. 16 is a drawing for illustrating a vehicle according to an embodiment of the present disclosure.

Referring to FIG. 15, the battery pack 1 may include at least one battery cell array 10, 20 and a pack case 50 for accommodating the at least one battery cell array 10, 20.

The battery pack 1 may further include an electric unit.

The electric unit is provided in the pack case 500 and may include electrical components such as a BMS that controls battery cell array 10, 20 of the battery pack 1. The electric unit may further include components such as a current sensor, a fuse, and a service plug.

Referring to FIG. 16, a vehicle V according to an embodiment of the present disclosure may include one or more battery packs 1 according to the present disclosure. Also, the vehicle V according to an embodiment of the present disclosure may further include various other components included in the vehicle in addition to the battery pack 1. For example, the vehicle V according to an embodiment of the present disclosure may further include a body, a motor, a control device such as an ECU (electronic control unit), etc. in addition to the battery pack 1 according to an embodiment of the present disclosure.

In addition, it is also possible that the battery pack 1 according to an embodiment of the present disclosure is equipped in other devices, instruments, and facilities, such as an energy storage system using a secondary battery, in addition to the vehicle V.

According to various embodiments as described above, it is possible to provide a battery cell array 10, 20 capable of preventing leakage of the filling member 400, a battery pack 1 including the battery cell array 10, 20, and a vehicle V including the battery pack 1.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery cell array comprising:
a plurality of battery cells;
a side frame configured to support the plurality of battery cells and form an edge of the battery cell array;
at least one cooling unit disposed between the plurality of battery cells and assembled with the side frame to be at least partially protruding out of the side frame;
a filling member filled between the plurality of battery cells; and
a leak prevention unit configured to seal a gap space created when the side frame and the at least one cooling unit are assembled to prevent leakage of the filling member while the filling member is filled.

2. The battery cell array according to claim 1, further comprising:
a sheet member provided to a bottom of the plurality of battery cells and the side frame.

3. The battery cell array according to claim 1,
wherein the leak prevention unit fills the gap space.

4. The battery cell array according to claim 1,
wherein the leak prevention unit includes a foam member.

5. The battery cell array according to claim 1,
wherein the side frame includes a cooling unit passing portion configured to protrude a part of the at least one cooling unit to an outside of the side frame so that the gap space is formed therein during the assembling, and
wherein the leak prevention unit seals the cooling unit passing portion in which the gap space is formed.

6. The battery cell array according to claim 5,
wherein the cooling unit passing portion includes:
a step portion formed to be stepped at a predetermined depth from an outer surface of the side frame; and
a passage groove provided in the step portion to allow a part of the cooling unit to pass therethrough,
wherein the leak prevention unit is filled in the step portion to seal a gap of the passage groove.

7. The battery cell array according to claim 5,
wherein the side frame includes:
a pair of side walls provided at both outermost sides of the plurality of battery cells; and
a plurality of side structures provided between the pair of side walls,
wherein the cooling unit passing portion is provided in plurality and provided to both the pair of side walls and the plurality of side structures, and
wherein the leak prevention unit is provided in plurality to seal all gap spaces of the plurality of cooling unit passing portions.

8. The battery cell array according to claim 2,
wherein the sheet member contains insulating material.

9. The battery cell array according to claim 2,
wherein the sheet member is provided as a polycarbonate sheet.

10. The battery cell array according to claim 2, further comprising:
an adhesive member applied to an edge of the sheet member to fix the sheet member to the side frame.

11. The battery cell array according to claim 2,
wherein the filling member contains a resin with adhesive properties.

12. The battery cell array according to claim 2,
wherein an edge of the sheet member is sealed as being pressed by a weight of the side frame when the side frame is mounted.

13. A battery pack comprising at least one battery cell array according to any one of claims 1 to 12.

14. A vehicle comprising at least one battery pack according to claim 13.
